# EUROPEAN PATENT APPLICATION

(11) **EP 1 557 970 A1**
(43) Date of publication of application: **27.07.2005**
(21) Application number: 04028332.7
(22) Date of filing: 30.11.2004
(51) Int. Cl.: H04L 9/08

(54) **Eaves dropping apparatus for VPN using IKE (diffie Hellman encryption scheme)**

(30) Priority: 20.01.2004 JP 2004011963
(71) Applicant: Matsushita Electric Works, Ltd., Kadoma-shi, Osaka (JP)
(72) Inventor: Akimoto, Masao, Ichikawa City Chiba (JP)
(74) Representative: Turi, Michael, Dipl.-Phys.

(57) **Abstract**

A common security key generation apparatus is employed to analyze encrypted data by using key data of a transmitter and a receiver. When exchanging keys between an initiator and a responder, the common security key generation apparatus creates security keys of the initiator and the responder, and public keys based on the security keys, thereby transmitting the public key of the initiator to the responder and the public key of the responder to the transmitter, simultaneously. A common security key of the responder is created from a public key of the responder received from the responder and the security key of the initiator created by the common security key generation apparatus, and a common security key of the initiator is created from a public key of the initiator received from the initiator and the security key of the responder created by the common security key generation apparatus.

## Description

The present invention relates to a common security key generation apparatus, which produces a common security key used for performing highly secure data communication by encrypting communication data and, simultaneously, performing an authentication processing by using authentication data during communication between a transmitter and a receiver, to thereby prevent the communication data from being intercepted and altered in, e.g., a communication system employing the Internet Protocol (IP).

Conventionally, as a protocol for preventing communication data from being intercepted and altered in the Internet, there has been known a group of protocols, i.e., the IPsec (IP security protocol) defined as RFC (Request For Comments) 2401 to 2410.

The IPsec includes a key managing protocol called as an IKE (Internet Key Exchange), in which a common security key (hereinafter, referred to as a session key), which is used in encrypting the communication data at a transmitter and decrypting the encrypted communication data at a receiver, is changed periodically. In the IKE, there are provided functions of negotiating an encryption algorithm or a hash algorithm, a key exchange, a mutual authentication and the like which need be performed between the transmitter and the receiver before communicating application data therebetween. Further, the IKE includes a function of encrypting data which is communicated therebetween for performing the negotiation, the key exchange or the mutual authentication.

In the mutual authentication of the IKE, as disclosed in "New Direction in Cryptography," IEEE Transaction on Information Theory, vol. 22, NO. 6, November 1976, one of two authentication methods is used: one using a pre-shared key: and the other using a key encryption-typed digital signature. In the former, the pre-shared key and, in the latter, a pair (hereinafter, referred to as PKCS#12) of a security key and a certificate, respectively, are prepared in the transmitter and the receiver in advance, thereby performing the mutual authentication and constructing a VPN (virtual private network) session in which the communication data is encrypted.

However, in case of constructing the VPN session between different types of VPN apparatuses by using the aforementioned mutual authentication of the IKE, a communication setup may be performed in a wrong way due to a difference in the communication setup language, structure of setup interface and the like, resulting in a failure of a communication connection therebetween.

In the VPN session where the communication data is transmitted without being encrypted, cause for failure of communication connection can be inspected by intercepting and analyzing the contents of the communication data by using a protocol analyzer. In the mutual authentication of the IKE wherein encrypted data is used, however, such analysis cannot be performed by using the conventional protocol analyzer.

To solve this problem, a protocol analyzer having a decryption function may be employed to decrypt an encrypted packet. To perform the decryption function, a session key (common security key) created in the IKE should be obtained by the protocol analyzer. However, the conventional VPN apparatus is not provided with a function of outputting the common security key; and, consequently, it is practically impossible to decrypt the encrypted packet.

It is, therefore, an object of the present invention to provide a common security key generation apparatus capable of decrypting and analyzing encrypted data, which is transmitted and received between a transmitter and a receiver, by using key data utilized therein.

In accordance with the present invention, there is provided a common security key generation apparatus in a communication system, being located between a communication device of an initiator and a communication device of a responder, which transmits and receives an encrypted packet therebetween, comprising: a key shared data maintenance unit for storing a predetermined value previously negotiated between the communication device of the initiator and the communication device of the responder; a security key generation unit for creating a security key by generating a random number; a public key generation unit for creating a public key by using both the security key created by the security key generation unit and the value stored in the key shared data maintenance unit; and a common security key generation unit for creating a common security key by using a public key received from the communication device of the initiator or the communication device of the responder, the security key created by the security key generation unit and the value stored in the key shared data maintenance unit, wherein, when a key exchange is performed between the communication device of the initiator and the communication device of the responder, a security key of the initiator and a security key of the responder are created by the security key generation unit, a public key of the initiator is created from the security key of the initiator and, simultaneously, a public key of the responder is created from the security key of the responder by the public key generation unit; the public key of the initiator is transmitted to the responder and, simultaneously, the public key of the responder is transmitted to the initiator, and a common security key of the responder is created by using the security key of the initiator created by the security key generation unit and the public key received from the communication device of the responder and, simultaneously, a common security key of the initiator is created by using the security key of the responder created by the security key generation unit and the public key received from the communication device of the initiator.

The above and other objects and features of the present invention will become apparent from the following description of preferred embodiments, given in conjunction with the accompanying drawings, in which:

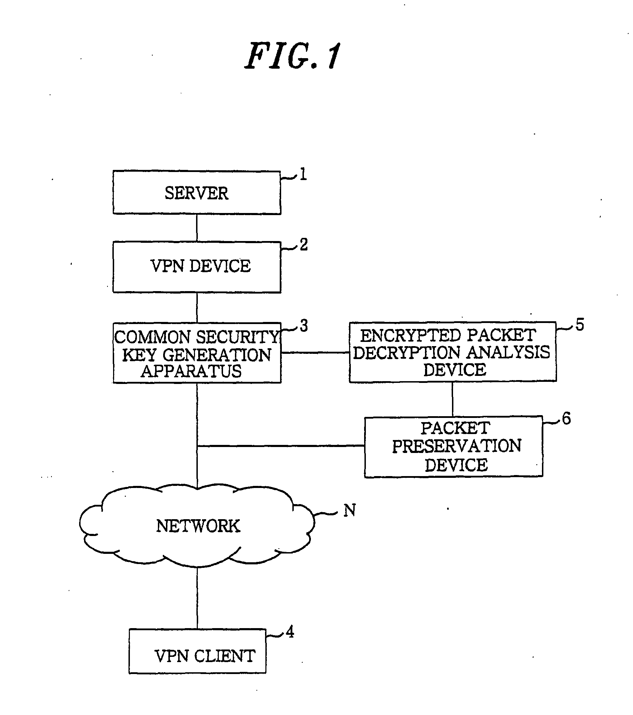

Fig. 1 shows a configuration of a communication system including a common security key generation apparatus in accordance with the present invention;
Fig. 2 presents a structure of a common security key generation apparatus in accordance with the present invention;
Fig. 3 illustrates a flow chart for describing an overall operation of the common security key generation apparatus in accordance with the present invention;
Fig. 4 depicts a flow chart for describing a sequence of processing an IKE of the common security key generation apparatus in accordance with the present invention;
Fig. 5 provides a flow chart for describing a sequence of processing an ESP of the common security key generation apparatus in accordance with the present invention; and
Fig. 6 represents a flow chart for describing a processing sequence of a communication system including the common security key generation apparatus in accordance with the present invention.

A preferred embodiment of the present invention will now be described with reference to the drawings.

The present invention may be applied to a communication system in which a virtual private network (VPN) session is setup via a common security key generation apparatus 3 located between a server 1, a VPN device 2 and a VPN client 4. In the communication system, to prevent a fake source and an interception of packet data in a network N wherein the packet data is communicated from the VPN client 4 to the server 1 via the network N, the VPN device 2 is installed at a boundary of the network N and a local area network (LAN) to which the server 1 is connected and, the VPN session is setup by using an IPsec between the VPN client 4 and the VPN device 2. Consequently, the security of the packet data can be guaranteed and the encrypted communication data can be decrypted and analyzed when a problem occurs during an encryption related communication.

### A1. Structure of Communication System

In the above-described communication system, the server 1, the VPN device 2 and the common security key generation apparatus 3 are connected to the VPN client 4 through the network N. Further, the communication system includes an encrypted packet decryption analysis device 5 connected to the common security key generation apparatus 3, and a packet preservation device 6 connected to the encrypted packet decryption analysis device 5 and the network N via a hub or a tap.

Moreover, in the communication system, the server 1, the VPN device 2 and the common security key generation apparatus 3 are connected to one another by an IP (internet protocol) based LAN. Also, the common security key generation apparatus 3, the encrypted packet decryption analysis device 5 and packet preservation device 6 are connected to one another by another LAN. Herein, the network N of the communication system may be an IP network which is accessible in a public domain.

The server 1 of the communication system includes a web server and a FTP (file transfer protocol) server, which generate communication data to be transmitted to the VPN client 4. To be specific, the server 1 is requested by the VPN client 4 to transmit data, acquires the requested data and then transmits the acquired data to the VPN device 2.

In case the packet data is encrypted and transmitted between the VPN device 2 and the VPN client 4, a VPN session is set up therebetween, so as to provide a session key for encrypting and decrypting the packet data by performing an IKE (internet key exchange) process. Further, the VPN device 2 and the VPN client 4 process an IP packet in accordance with tunneling protocols. Furthermore, the VPN device 2 and the VPN client 4 generate the IP packet by processing it in accordance with the IPsec, i.e., a security protocol for the network layer, among the tunneling protocols. Specifically, the VPN device 2 and the VPN client 4 perform a processing (ESP processing) in accordance with a safety protocol, e.g., an encapsulating security payload (ESP) protocol for making the ESP, among the protocols included in the IPsec.

While the IKE processing and the ESP processing are being performed in the VPN device 2 and the VPN client 4, the common security key generation apparatus 3 receives data transmitted from the VPN device 2 or the VPN client 4. Additionally, by performing a predetermined process, which will be described later, the common security key generation apparatus 3 generates data to be transmitted to the VPN device 2 or the VPN client 4. At this time, the common security key generation apparatus 3 creates a session key which is used for encryption and decryption processes in the VPN device 2 and the VPN client 4.

There exist four types of the session keys, i.e., session keys of IKE for VPN device 2 and VPN client 4, respectively, and session keys of ESP for VPN device 2 and VPN client 4, respectively. The session keys are created in the VPN device 2, the VPN client 4 and the common security key generation apparatus 3; and the session key created in the common security key generation apparatus 3 is outputted to the encrypted packet decryption analysis device 5.

Hereinafter, for the sake of simplicity, there will be explained a case where, among processes defined in RFC (request for comments) 2409, a mutual authentication using a pre-shared key is performed as a main mode and a part of the processes is omitted. Further, a security key and a public key are referred to those defined in RFC 2631, and there will be omitted descriptions on the method of handling errors, e.g., in case unexpected data is inputted thereto.

The encrypted packet decryption analysis device 5 receives and preserves therein an IKE session key and an ESP session key which are created in the common security key generation apparatus 3. Herein, in case a plurality of VPN devices 2 and VPN clients 4 exist and communicate with each other simultaneously, i.e., a plurality of VPN session exist, the encrypted packet decryption analysis device 5 preserves the IKE session key and the ESP session key for each of the VPN sessions. Further, the encrypted packet decryption analysis device 5 updates the preserved session keys according to an update of session keys by the IKE processing.

Furthermore, in case problem occurs in a communication between the VPN device 2 and the VPN client 4 or in case a command for analyzing packets being transceived by the VPN device 2 is directly inputted thereto by a user, the encrypted packet decryption analysis device 5 reads out a packet to be analyzed from the packet preservation device 6 and decrypts the packet by using the session key created in the common security key generation apparatus 3. Accordingly, the encrypted packet decryption analysis device 5 presents the decrypted packet to the user by displaying it on a screen.

During a packet communication between the VPN device 2 and the VPN client 4 in the communication system, the common security key generation apparatus 3 performs processes of, e.g., decrypting and analyzing of a packet, preservation, transformation, encryption and transmission of contents. Accordingly, by intercepting communication data between the VPN device 2 and the VPN client 4, the contents of encrypted communication data can be analyzed by the encrypted packet decryption analysis device 5 while the VPN device 2 and the VPN client 4 perform a conventional communication process of their own.

### A2. Structure of Common Security Key Generation Apparatus

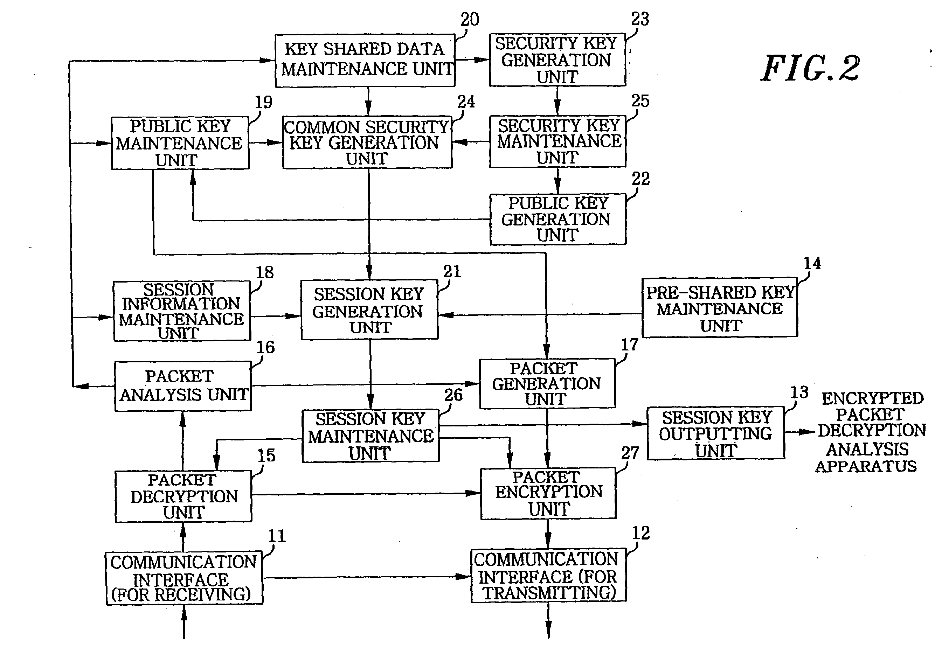

Next, referring to Fig. 2, there will be described a functional configuration of the common security key generation apparatus 3 in the above-described communication system. In the description below, a VPN device 2 or a VPN client 4 which is initiated to set up a VPN session is called as an initiator and, a VPN device 2 or a VPN client 4 which reacts on the operation of the initiator is called as a responder. Further, each of the units comprising the common security key generation apparatus 3 may be a functional unit which is implemented by executing a communication control program with a CPU in accordance with protocols, e.g., IKE or ESP, which is stored in, e.g., a ROM, or unit implemented by using a hardware such as an interface circuit and a hard disc.

The common security key generation apparatus 3 includes a receiving communication interface 11 and a transmitting communication interface 12 for the VPN device 2 and the VPN client 4 and, a session key outputting unit 13 for the encrypted packet decryption analysis device 5. Even though each of the communication interfaces 11 and 12 is referred to as, for simplicity, a "receiving" or a "transmitting" interface, respectively, one of the communication interfaces is actually connected to the VPN device 2 and the other to the network N. Accordingly, in case of receiving packets from the VPN device 2, the communication interface connected to the VPN device 2 becomes the receiving communication interface 11, and the communication interface connected to the network N becomes the transmitting communication interface 12. Similarly, in case of receiving packets from the network N, the communication interface connected to the network N becomes the receiving communication interface 11, and the communication interface connected to the VPN device 2 becomes the transmitting communication interface 12.

Further, when a problem occurs during a data communication between the VPN device 2 and the VPN client 4 of the communication system, the session key outputting unit 13 outputs a session key preserved in the session key maintenance unit 26 of the common security key generation apparatus 3. Subsequently, the encrypted packet decryption analysis device 5 decrypts and analyzes the contents of the encrypted communication data preserved in the packet maintenance unit 6 by using the session key from the common security key generation apparatus 3.

Furthermore, the communication system includes a pre-shared key maintenance unit 14 for storing a pre-shared key which is previously negotiated between the VPN device 2 and the VPN client 4 constituting the VPN session. The pre-shared key stored in the pre-shared key maintenance unit 14 is inputted, e.g., by a keyboard manipulation of a user of the communication system, who audits a communication status of the VPN device 2 and the VPN client 4. Further, the common security key generation apparatus 3 sets up not only the pre-shared key but also information needed to struct the VPN session.

If the common security key generation apparatus 3 receives a packet including encrypted data at the communication interface 11, the packet is decrypted by a packet decryption unit 15 and the decrypted packet is delivered to a packet analysis unit 16. In case the packet received via the communication interface 11 includes no encrypted data, the packet is sent to the packet analysis unit 16 without decryption. Then, the packet analysis unit 16 analyzes the contents of the decrypted packet and sends a necessary part of the contents to a packet generation unit 17, a session information maintenance unit 18, a public key maintenance unit 19 or a key shared data maintenance unit 20.

The session information maintenance unit 18 stores session information which is received and transmitted during the IKE process between the VPN device 2 and the VPN client 4. The session information of the initiator and the responder stored in the session information maintenance unit 18 is read out for use in creating a session key in the session key generation unit 21.

The public key maintenance unit 19 stores public keys of the initiator and the responder delivered from the packet analysis unit 16, and the public keys of a initiator side and a responder side generated at the public key generation unit 22. The public keys of the initiator and the responder stored in the public key maintenance unit 19 are read out for creating a common security key in the common security key generation unit 24. Further, the public key of the initiator side is read out for transmission to the responder, and the public key of the responder is read, out to be transmitted to the initiator, by the packet generation unit 17.

The key shared data maintenance unit 20 stores an attribute value of a group description of a transform payload in a proposal payload included in one of IKESA's (valid IKESA) selected by the responder, the IKESA's being proposed by the initiator. The attribute value stored in the key shared data maintenance unit 20 is read out for creating a security key in the security key generation unit 23, and, simultaneously, read out for creating a security key in the common security key generation unit 24.

The security key generation unit 23 creates security keys of the initiator side and the responder side, which are stored in the security key maintenance unit 25. At this time, the security key generation unit 23 determines the type of the security keys with reference to the attribute value of the group description preserved in the key shared data maintenance unit 20.

The public key generation unit 22 creates the public key of the responder side by using the security key of the responder side stored in the security key maintenance unit 25 and, simultaneously, creates the public key of the initiator side by using the security key of the initiator side stored in the security key maintenance unit 25, thereby storing each of the created public keys into the public key maintenance unit 19. Accordingly, the packet generation unit 17 can analyze each of the public keys stored in the public key maintenance unit 19, which are to be transmitted to the initiator and the responder.

The common security key generation unit 24 creates a common security key of the initiator based on a value of an Oakley group related with the attribute of the group description stored in the key shared data maintenance unit 20, the public key of the initiator preserved in the public key maintenance unit 19 and the security key of the responder side preserved in the security key maintenance unit 25. Similarly, the common security key generation unit 24 creates a common security key of the responder based on value of an Oakley group, the public key of the responder and the security key of the initiator side. Next, the common security key generation unit 24 outputs the common security keys of the initiator and the responder to the session key generation unit 21.

The session key generation unit 21 creates a SKEYID with reference to the session information stored in the session information maintenance unit 18 by using a pre-shared key stored in the pre-shared key maintenance unit 14, after the common security keys of the initiator and the responder have been inputted from the common security key generation unit 24. Further, the session key generation unit 21 creates session keys, based on the session information stored in the session information maintenance unit 18, by using the SKEYID and common security keys of the initiator and the responder stored in the common security key generation unit 24, and then stores the created session keys in the session key maintenance unit 26.

In case the common security key generation apparatus 3 transmits a packet to the responder or the initiator, the packet generation unit 16 generates the packet by recognizing information to be stored into the packet based on information outputted from the packet analysis unit 16. Further, in case the common security key generation apparatus 3 encrypts a packet generated by the packet generation unit 17, the packet encryption unit 27 reads out the session key stored in the session key maintenance unit 26 to encrypt the packet and then transmits the encrypted packet via the communication interface 12.

### A3. Operation of Common Security Key Generation Apparatus

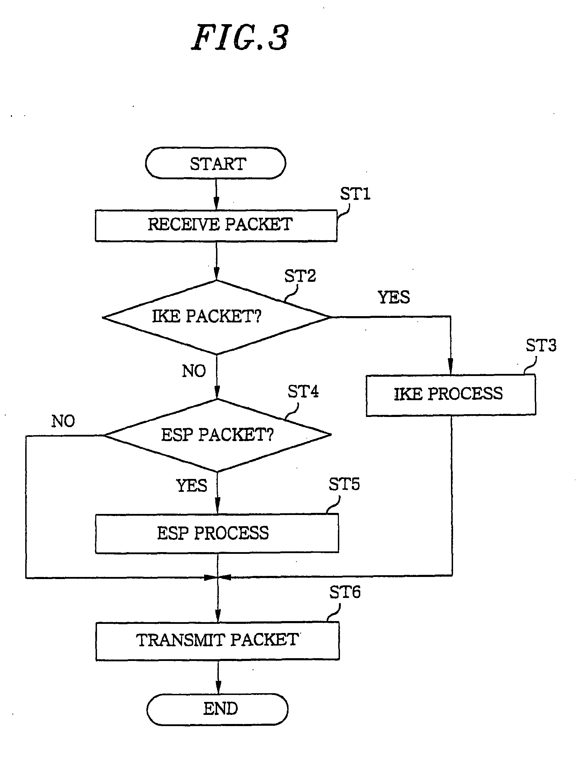

In the following, there will be described an operation of the common security key generation apparatus 3, referring to Figs. 3 to 6.

An overall operation of the common security key generation apparatus 3 is shown in Fig. 3. First, the packet is received from the VPN device 2 or the VPN client 4 (step ST1) and then it is checked whether the received packet is a packet used in the IKE processing (IKE packet) (step ST2). At this time, the packet analysis unit 16 of the common security key generation apparatus 3 determines the type of the packet by referring to a header of a low-level protocol, such as IP, included in the packet. If the packet is determined to be the IKE packet, move to the step ST3; and if the packet is determined not to be the IKE packet, move to the step ST4.

At the step ST3, before data is communicated between the server 1, the VPN device 2 and the VPN client 4, the common security key generation apparatus 3 performs the IKE process to set up a VPN session by exchanging keys between the VPN device 2 and the VPN client 4. By performing the IKE process defined as RFC 2409, an IKE and an ESP session keys of the VPN device 2 and an IKE and an ESP session keys of the VPN client 4 are created. During the IKE processing, the keys are exchanged in accordance with ISAKMP (Internet Security Association and Key Management Protocol) defined as RFC 2408.

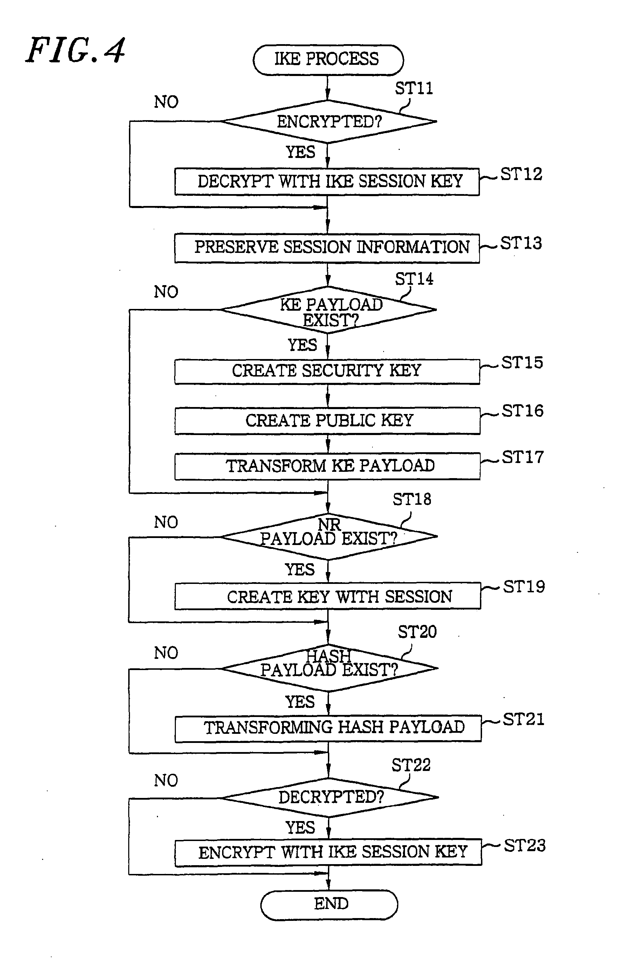

Further, in the step ST3, the common security key generation apparatus 3 performs a process shown in Fig. 4 once whenever a packet is received in the step ST1. Then, the common security key generation apparatus 3 proceeds to perform the step ST6 after performing the IKE process of the step ST3, and terminates its operation by transmitting the packet generated by the IKE process to the VPN device 2 or the VPN client 4. The process shown in Fig. 4 will be described later.

Meanwhile, in the step ST4, the common security key generation apparatus 3 checks whether the packet received in the step ST1 is an ESP packet. The packet analysis unit 16 determines the type of the packet by referring to, e.g., header information included in the packet, and if the type of packet is found to be the ESP packet, move to the step ST5; however, if the type of packet is found not to be the ESP packet, move to the step ST6.

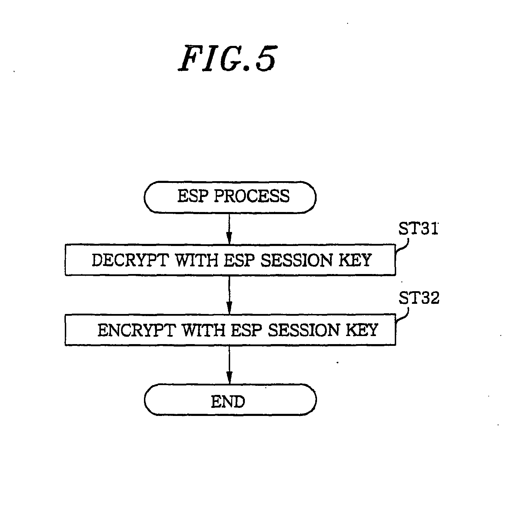

In the step ST5, the common security key generation apparatus 3 performs the ESP process as shown in Fig. 5. Then, the packet created in the ESP process is transmitted to the VPN device 2 or the VPN client 4. The process shown in Fig. 5 will be described later. Further, in the step ST6, if a checksum field is included in the packet, the checksum field is updated with a recalculated value.

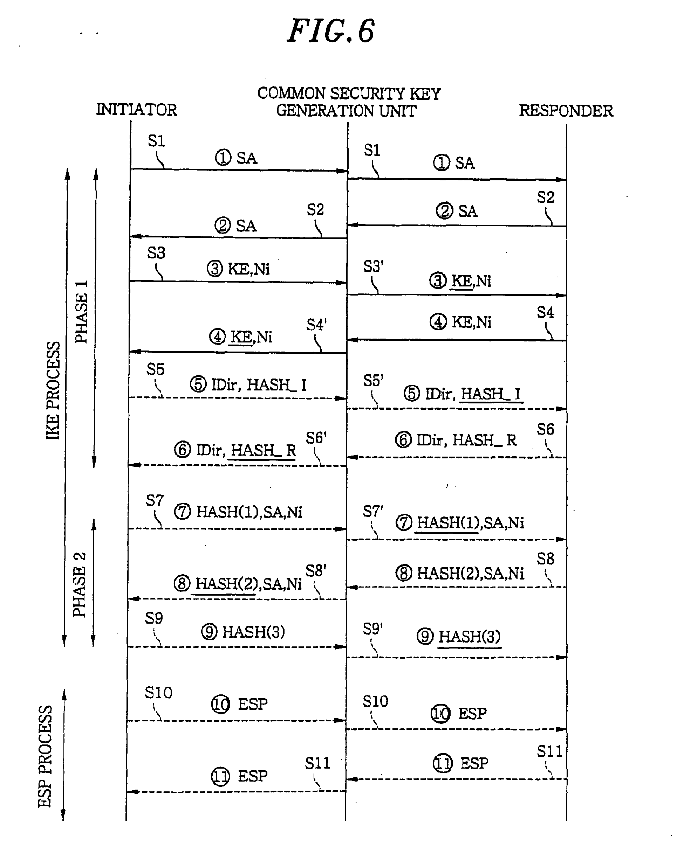

Next, referring to Figs. 4 and 6, there will be described the IKE process performed in the step ST3. As shown in Fig. 6, the IKE process includes a first to a ninth processes represented by 1 to 9, respectively.

The IKE process includes two phases, i.e., a first and a second phases. In the first phase, a mutual authentication and an exchange of session keys used in the IKE process (hereinafter, referred to as IKE session key) are performed between the VPN device 2 and the VPN client 4. In the second phase, an exchange of session keys used in the ESP processing (hereinafter, referred to as ESP session key) is performed.

Further, the first phase may be performed in one of a main mode and an aggressive mode. In the main mode, IDs of the initiator and the responder are encrypted while in the aggressive mode, the Ids of the initiator and the responder are not encrypted, thereby simplifying the process thereof compared with that of the main mode. In the ensuing discussion, there will be described a case where the main mode of the first phase is performed between the VPN client 4 as the initiator, the VPN device 2 as the responder.

In the first phase, as shown in Fig. 6, the initiator transmits the packet including a security association (SA) payload as an IKE packet S1 to the responder. The SA payload includes at least one group of data having an algorithm for encrypting data for the IKE process, a hash algorithm for creating an authentication code, a method of mutual authentication, a prime number for creating a key (Oakley group), a validity term of a session key and the like.

Thereafter, the common security key generation apparatus 3 receives the IKE packet S1 including SA payload transmitted from the initiator through the communication interface 11 (step ST1), confirms that the IKE packet is received (step ST2), and proceeds to perform the IKE process shown in Fig. 4 (step ST3).

In the IKE process, the IKE packet received through the communication interface 11 is inputted to the packet decryption unit 15, which refers to a value stored in a flag field of an ISAKMP header of the IKE packet S1 to check if an encryption bit E is stored in the flag field, thereby determining whether the data included in the IKE packet S1 is encrypted or not. In this case, since the data in the IKE packet S1 including the SA payload is not encrypted, the data in the IKE packet S1 is outputted to the packet analysis unit 16 from the packet decryption unit 15 without being decrypted and then the process proceeds to the step ST13.

In the step ST13, the packet analysis unit 16 reads out the value of the SA payload and an initiator cookie of the ISAKMP header from the IKE packet S1, which are stored in the session information maintenance unit 18.

Next, the packet analysis unit 16 determines whether a key exchange (KE) payload is included behind the ISAKMP header of the IKE packet S1 (step ST14), whether a random number payload transmitted by the responder is included therein (step ST18) and whether a hash payload is included therein (step ST20). In this case, since none of the key exchange payload, the random number payload and the hash payload is included in the IKE packet S1 having the SA payload, the packet analysis unit 16 proceeds to perform the step ST22 without performing the steps ST15 to ST17, ST19 and ST21.

Next, in the step ST22, the packet analysis unit 16 determines whether the IKE packet S1 is decrypted by performing the step ST12. In this case, since the IKE packet S1 is not decrypted, the packet analysis unit 16 terminates the process. Further, the common security key generation apparatus 3 outputs the IKE packet S1 received at the step ST11 from the packet analysis unit 16 to the packet generation unit 17, and transmits the outputted IKE packet to the responder via the communication interface 12 without encrypting it at the packet encryption unit 27.

Accordingly, the responder receives the IKE packet S1 including therein the SA payload. When the IKE packet S1 including the SA payload is received, the responder selects one of IKESA's including the IKE packet (hereinafter, the selected IKESA is referred to as a valid IKESA), makes an IKE packet S2 having a SA payload of the valid IKESA, and transmits the IKE packet S2 to the initiator.

Next, the common security key generation apparatus 3 receives the IKE packet S2 transmitted from the responder via the communication interface 11 (step ST1), proceeds to execute the IKE process shown in Fig. 4 (step ST3) after confirming that the received packet is an IKE packet (step ST2).

In the step ST11 of the IKE process, the IKE packet S2 received via the communication interface 11 is inputted to the packet decryption unit 15, which refers to a value stored in a flag field of an ISAKMP header of the IKE packet S2 for checking if an encryption bit E is stored in the flag field, to thereby determine whether the data in the IKE packet S2 is encrypted or not. In this case, since the data in the IKE packet S2 including the SA payload is not encrypted, the data in the IKE packet S2 is not decrypted and outputted to the packet analysis unit 16 from the packet decryption unit 15, and then the process proceeds to the step ST13.

In the step ST13, the packet analysis unit 16 reads out an initiator cookie of the ISAKMP header from the IKE packet S2 and the value of the SA payload, which are outputted and stored into the session information maintenance unit 18. Further, the packet analysis unit 16 preserves an attribute value of group description of a transform payload of a proposal payload included in the IKESA into the key shared data maintenance unit 20.

Thereafter, the packet analysis unit 16 determines whether a key exchange (KE) payload is included behind the ISAKMP header of the IKE packet S2 (step ST14), whether a random number payload transmitted by the responder is included therein (step ST18) and whether a hash payload is included therein (step ST20). In this case, since none of the key exchange payload, the random number payload and the hash payload is included in the IKE packet S1, the packet analysis unit 16 proceeds to perform the step ST22 without performing the steps ST15 to ST17, ST19 and ST21.

Next, the packet analysis unit 16 determines whether the IKE packet S2 is decrypted by performing the step ST12. In this case, since the IKE packet S2 is not decrypted, the packet analysis unit 16 terminates the process. Further, the common security key generation apparatus 3 outputs the IKE packet S2 received at the step ST11 from the packet analysis unit 16 to the packet generation unit 17, and transmits the IKE packet to the initiator via the communication interface 12 without encrypting it at the packet encryption unit 27.

Accordingly, the initiator receives the IKE packet S2 having the valid IKESA. When the IKE packet S2 having the valid IKESA is received, the initiator recognizes the IKESA included in the IKE packet S2 as the valid IKESA.

In this way, the initiator, the responder and the common security key generation unit 3 preserve the valid IKESAs, such that the negotiation of contents of IKESA representing the encryption algorithm or the hash algorithm in the IKE process is completed. Then, the key exchange is performed in the communication system.

That is, the initiator creates a security key x by generating a random number. By using the security key x, an initial seed g and a prime number p presented by the attribute value of group description of the transform payload in the proposal payload included in the valid IKESA, the initiator creates a public key *g*^{*x*} mod *p* and a key exchange payload including the public key *g*^{*x*} mod *p* therein. Further, the initiator creates a random number payload including an independently generated random number *Ni_b .* Then, the initiator generates an IKE packet S3 including the created key exchange payload and a random number payload *Ni* and transmits the IKE packet S3 to the responder. Herein, the initial seed *g* of the IKE is 2. Hereinafter, for the sake of simplicity, *g*^{*x*} mod *p* is represented as *g*^{*x*} by omitting 'mod *p*' .

Next, the common security key generation apparatus 3 receives the IKE packet S3 including the key exchange payload and the random number payload via the communication interface 11 (step ST1), and proceeds to perform the IKE process shown in Fig. 4 (step ST3) after checking that the received packet is an IKE packet (step ST2).

At the step ST11 of the IKE process, the packet decryption unit 15 determines whether the data in the IKE packet S3 received from the communication interface 11 is encrypted or not. In this case, since the data in the IKE packet S3 is not encrypted, the IKE packet S3 is not decrypted and outputted to the packet analysis unit 16 from the packet decryption unit 15, and the process proceeds to the step ST13.

At the step ST13, the packet analysis unit 16 reads out the public key *g*^{*x*} of the initiator from the key exchange payload of the IKE packet and stores the public key into the public key maintenance unit 19. Simultaneously with this, the packet analysis unit 15 reads out the random number *Ni_b* from the random number payload of the IKE packet S3, which is stored into the session information maintenance unit 18.

Next, the packet analysis unit 16 determines whether a key exchange (KE) payload is included behind the ISAKMP header of the IKE packet S3 (step ST14). In this case, since the key exchange payload is included therein, the packet analysis unit 16 proceeds to execute the steps ST15 to ST17.

In the step ST15, the security key generation unit 23 generates a security key *x*' of the initiator side and preserves it in the security key maintenance unit 25. Subsequently, in the step ST16, the public key generation unit 22 creates a public key *g*^{*x'*} of the initiator side based on the security key *x'* of the initiator side preserved in the generation maintenance unit 25 which is stored in the public key maintenance unit 19. Thereafter, in the step ST17, the packet generation unit 17 overwrites the public key *g*^{*x*} of the initiator, which is included in the IKE packet S3 received at the step ST1 by the public key *g*^{*x'*} of the initiator side preserved in the public key maintenance unit 19, thereby producing an IKE packet S3'.

Next, the packet analysis unit 16 determines whether the IKE packet S3 includes the random number payload Nr (step ST18) and the hash payload (step ST20) transmitted by the responder. In this case, since neither the random number payload nor the hash payload transmitted by the responder is included therein, the packet analysis unit 16 proceeds to perform the step ST22 without performing the steps ST19 and ST21.

Subsequently, the packet analysis unit 16 determines whether the IKE packet S3 is decrypted by performing the step ST12. In this case, since the IKE packet S3 is not decrypted, the process is terminated.

The common key generation unit 3 outputs the IKE packet S3' produced at the step ST17 from the packet analysis unit 16 to the packet generation unit 17, and transmits the packet S3' via the communication interface 12 to the responder without encrypting it in the packet encryption unit 27 (step ST6).

In this way, the responder receives the IKE packet S3' including the key exchange payload and the random number payload, in the same way as is done by the initiator, the responder creates a security key *y* by generating a random number. By using the security key *y*, the responder creates a public key *g*^{*y*} mod *p* and a key exchange payload including therein the public key *g*^{*y*} mod *p* . Further, the responder creates a IKE packet S4 including the key exchange payload and a random number payload having therein the independently generated random number *Nr_b ,* and transmits the IKE packet to the initiator.

Further, the responder creates a SKEYID based on a pre-shared key, its random number *Nr_b* and the random number *Ni_b* of the initiator included in the random number payload of the received IKE packet S3'. Then, the responder obtains a common security key *g*^{*x'y*} mod *p = (g*^{*x'*}*)*^{*y*} mod *p* based on the security key *y* and the public key *g*^{*x'*} of the initiator side. Furthermore, the responder creates SKEYID_d, SKEYID_a and SKEYID_e based on the SKEYID, the common security key *g*^{*x'y*}, the initiator cookie and the responder cookie.

Next, the common security key generation apparatus 3 receives the IKE packet S4 including the key exchange payload and the random number payload transmitted from the responder via the communication interface 11 (step ST1), confirms that the received packet is an IKE packet (step ST2), and performs the IKE process shown in Fig. 4.

In the step ST11 of the IKE process, the packet description unit 15 determines whether the data in the IKE packet S4 received via the communication interface 11 is encrypted or not. In this case, since the data in the IKE packet S4 is not encrypted, the IKE packet S4 is not decrypted and outputted to the packet analysis unit 16 from the packet decryption unit 15, and the process proceeds to the step ST13.

In the step ST13, the packet analysis unit 16 reads out the public key *g*^{*y*} of the responder from the key exchange payload of the IKE packet S4 and preserves it in the public key maintenance unit 19 and, simultaneously, reads out the random number value *Nr_b* from the random number payload S4 of the IKE packet S4 and stores it into the session information maintenance unit 18.

Then, the packet analysis unit 16 determines whether a key exchange (KE) payload is included behind the ISAKMP header of the IKE packet S4 (step ST14). In this case, since the key exchange payload is included therein, the packet analysis unit 16 proceeds to execute the steps ST15 to ST17.

In the step ST15, the security key generation unit 23 generates the security key *y'* of the responder side and preserves it in the security key maintenance unit 25. In the subsequent step ST16, the public key generation unit 22 creates the public key *g*^{*y'*} of the responder side based on the security key *y'* of the responder side preserved in the security key maintenance unit 25, which is then stored in the public key maintenance unit 19. In the step ST17, the packet generation unit 17 overwrites the public key *g*^{*y*} of the responder, which is included in the IKE packet S4 received at the step ST1 by the public key *g*^{*y'*} of the responder side and preserved in the public key maintenance unit 19, thereby producing an IKE packet S4'.

Next, the packet analysis unit 16 determines whether the IKE packet S4 includes the random number payload *Nr* transmitted by the responder (step ST18). In this case, since the random number payload is included therein, the packet analysis unit 16 proceeds to carry out the step ST19.

In the step ST19, the session key generation unit 21 creates an IKE session key in accordance with RFC 2409. At this time, the common security key generation unit 24 of the common security key generation apparatus 3 calculates a common security key *g*^{*xy'*} of the initiator, based on the public key *g*^{*x*} of the initiator preserved in the public key maintenance unit 19, the security key *y'* of the responder side preserved in the security key maintenance unit 25 and the Oakley group *p* related with the attribute value of the group description of the key shared data maintenance unit 20.

Similarly, the common security key generation unit 24 calculates a common security key *g*^{*x'y*} of the responder, based on the public key *g*^{*y*} of the responder preserved in the public key maintenance unit 19, the security key *x'* of the initiator side preserved in the security key maintenance unit 25 and the Oakley group *p* related with the attribute value of the group description of the key shared data maintenance unit 20.

Thereafter, the session key generation unit 21 creates a SKEYID by using the hash algorithm of the valid IKESA, based on the random number *Nr_b,* the random number *Ni_b* and the pre-shared key kept in the pre-shared key maintenance unit 14. Further, based on the created SKEYID, the common security key *g*^{*xy'*} of the initiator and the initiator and the responder cookies preserved in the session information maintenance unit 18, the session key generation unit 21 creates SKEYID_d, SKEYID_a and SKEYID_e, i.e., the IKE session keys of the initiator, by using the hash algorithm of the valid IKESA, which are stored in the session key maintenance unit 26.

Similarly, based on the created SKEYID, the common security key *g*^{*x'y*} of the responder, and the initiator and the responder cookies preserved in the session information maintenance unit 18, the session key generation unit 21 creates SKEYID_d, SKEYID_a and SKEYID_e, i.e., the IKE session keys of the responder, by using the hash algorithm of the valid IKESA, which are stored in the session key maintenance unit 26. The IKE session keys of the responder created by the session key generation unit 21 are identical to those created by the responder when transmitting the IKE packet S4.

The common security key generation unit 3 creates the IKE session keys of the initiator and the responder, based on different common security keys such as the common security key *g*^{*xy'*} and *g*^{*x'y*} of the initiator and the responder.

Next, the packet analysis unit 16 determines whether the IKE packet S4 includes the hash payload (step ST20). In this case, since the hash payload is not included therein, the process proceeds to the step ST22 without performing the step ST21.

Sequentially, the packet analysis unit 16 determines whether the IKE packet S4 is decrypted by performing the step ST12. In this case, since the IKE packet S4 is not decrypted, the packet analysis unit 16 terminates the process.

Further, the common security key generation apparatus 3 outputs the IKE packet S4' received at the step ST17 from the packet analysis unit 16 to the packet generation unit 17, and transmits the IKE packet to the responder via the communication interface 12 without encrypting it in the packet encryption unit 27 (ST6).

Then, if the initiator receives the IKE packet S4' including the key exchange payload and the random number payload, the initiator creates a SKEYID based on the pre-shared key, the random number *Nr_b* included in the received random number payload and the random number *Nr_i* generated by the initiator, and calculates the common security key *g*^{*xy'*} based on the security key *x* created by the initiator and the public key *g*^{*y'*} of the responder side included in the IKE packet S4'. Further, the initiator creates SKEYID_d, SKEYID_a and SKEYID_e, which are the IKE session key of the responder, based on the SKEYID, the common security key *g*^{*xy'*} and the initiator and the responder cookies. The IKE session keys produced by the initiator are identical to those of the initiator created when the common security key generation apparatus 3 transmits the IKE packet S4'.

In this way, the process of maintaining the IKE session keys in the initiator and the responder is completed, such that the common security key generation apparatus 3 maintains therein the IKE session keys of the initiator and the responder. To be more specific, the initiator, the responder and the common security key generation apparatus 3 encrypt the data behind the ISAKMP header of the IKE packet, using the SKEYID_e as a session key, by employing the encryption algorithm which is set by the valid IKESA.

Next, the initiator composes an ID payload having an ID IDii of its own and a hash payload having a hash value. At this time, the initiator composes the hash payload having therein a hash value HASH_I calculated using the hash algorithm which is set by the valid IKESA, based on the SKEYID, the public key *g*^{*x*} of the initiator, the public key *g*^{*y'*} of the responder side, the initiator cookie, the responder cookie, the SA payload and the ID payload of the initiator in accordance with RFC 2409. Further, the initiator transmits an IKE packet S5 including the hash payload and the ID payload encrypted by using the IKE session key.

Next, the common security key generation apparatus 3 receives the IKE packet S5 transmitted from the initiator via the communication interface 11 (step ST1), and proceeds to perform the IKE process shown in Fig. 4 (step ST3) after confirming that the received packet is an IKE packet (step ST2).

In the step st11 of the IKE process, the packet decryption unit 15 determines whether the data in the IKE packet S5 received via the communication interface 11 at the step ST11 is encrypted or not. In this case, since the data in the IKE packet S5 is encrypted, the process moves to the step ST12, so that the packet decryption unit 15 decrypts the data in the IKE packet S5 by using the IKE session key of the initiator stored in the session key maintenance unit 26 by applying thereto the encryption algorithm of the valid IKESA, and outputs the decrypted data to the packet analysis unit 16, Thereafter, the process proceeds to the step ST13.

In the step ST13, the packet analysis unit 16 reads out the ID Idii of the initiator from the ID payload of the IKE packet S5, and stores the ID in the session information maintenance unit 18.

Next, the packet analysis unit 16 determines whether a key exchange (KE) payload is included behind the ISAKMP header of the IKE packet S5 (step ST14), whether the random number payload transmitted by the responder is included therein (step ST18), and whether the hash payload is included therein (step ST20). In this case, since the hash payload alone excluding the key exchange payload and the random number payload transmitted by the responder, is included therein, the packet analysis unit 16 proceeds to carry out the step ST21 without performing the steps ST15 to ST17 and ST19.

In the step ST21, the packet generation unit 17 transforms a hash value HASH_I included in the hash payload of the IKE packet S5 into a hash value recalculated based on the session information of the responder side. At this time, the packet generation unit generates the hash value by using the hash algorithm of the valid IKESA, based on the SKEYID, the public key *g*^{*x'*} of the initiator side preserved in the public key maintenance unit 19, which is transmitted to the responder, the public key *g*^{*y*} of the responder, the initiator and the responder cookies preserved in the session information maintenance unit 18, the SA payload value of the IKE packet S1 and the IDii of the initiator. Further, the packet generation unit 17 composes an IKE packet S5' including both the ID payload having the Idii and the hash payload having the transformed hash value HASH_I.

In the subsequent step ST22, since the packet has been decrypted by the packet decryption unit 15 at the step ST12, the process moves to the step ST23. In the step ST23, the packet encryption unit 27 reads out the IKE session key of the responder from the session key maintenance unit 26 by using the encryption algorithm of the valid IKESA, and then encrypts the IKE packet S5' obtained at the step ST21 by using the IKE session key.

Further, the common security key generation apparatus 3 transmits the encrypted IKE packet S5' through the communication interface 12 to the responder (step ST6).

In case the IKE packet S5' is received, the responder calculates the hash value by performing the same process as was done by the initiator when producing the IKE packet S5, and compares the calculated hash value with the hash value HASH_I included in the hash payload of the IKE packet S5'. Here, since these values are identical to each other, the responder confirms that no fake data is generated and no modification of the data is made during the IKE process performed with the initiator.

Next, the responder composes an ID payload having an ID IDir of its own and the hash payload having the hash value. At this time, the initiator composes the hash payload having therein a hash value HASH_R calculated using the hash algorithm which is set by the valid IKESA, based on the SKEYID, the public key *g*^{*y*} of the responder, the public key *g*^{*x'*} of the initiator side, the initiator and the responder cookies, the SA payload and the ID payload of the initiator in accordance with RFC 2409. Further, the responder transmits an IKE packet S6 generated by encrypting the hash payload and the ID payload with the IKE session key.

Next, the common security key generation apparatus 3 receives the IKE packet S6 transmitted from the responder via the communication interface 11 (step ST1), checks that a received packet is the IKE packet (step ST2), and moves to the IKE process shown in Fig. 4.

In the IKE process, the data in the IKE packet S6 received from the communication interface 11 at the step ST11 is determined to be encrypted or not by the packet decryption unit 15. In this case, since the hash payload and the ID payload in the IKE packet S6 are encrypted, the data in the IKE packet S6 is decrypted by the packet decryption unit 15 by using the encryption algorithm of the valid IKESA, based on the session key of the responder stored in the session key maintenance unit 26 (step ST12), and moves the processing to the step ST13.

In the step ST13, the packet analysis unit 16 outputs the ID Idir of the responder from the ID payload of the IKE packet S6, and stores the outputted ID in the session information maintenance unit 18.

Next, the packet analysis unit 16 determines if a key exchange (KE) payload is included behind the ISAKMP header of the IKE packet S6 (step ST14), further determines whether the random number payload transmitted by the responder is included therein (step ST18) and the hash payload is included therein (step ST20). In this case, since the hash payload and the ID payload are included therein, the packet analysis unit 16 proceeds to the step ST21 without performing the steps ST15 to ST17 and the step ST19.

In the step ST21, the packet generation unit 17 transforms a hash value HASH_R included in the hash payload of the IKE packet S6 into a hash value recalculated based on the session information of the initiator side. At this time, the packet generation unit creates the hash value by using the hash algorithm of the valid IKESA, based on the SKEYID, the public key *g*^{*y'*} of the responder side preserved in the public key maintenance unit 19, the public key *g*^{*x'*} of the initiator, the initiator and the responder cookies preserved in the public key maintenance unit 19, the SA payload value of the IKE packet S1 and the Idir of the initiator stored in the previous step ST13. Further, the packet generation unit 17 makes an IKE packet S6' including both the ID payload having the Idir and the hash payload having the transformed hash value HASH_R.

In the subsequent step ST22, since the packet has been decrypted by the packet decryption unit 15 at the previous step ST12, the process moves on to the step ST23. In the step ST23, the packet encryption unit 27 reads out the IKE session key of the initiator from the session key maintenance unit 26 by using the encryption algorithm of the valid IKESA, and then encrypts the IKE packet S6' written in the step ST21 by using the IKE session key.

Further, the common security key generation apparatus 3 transmits the encrypted IKE packet S6' from the communication interface 12 to the initiator (step ST6). In case the IKE packet S6' is received, the initiator calculates the hash value by performing the identical processing to the case of making the IKE packet S6 in the responder, and compares the calculated hash value with the hash value HASH_R included in the hash payload of the IKE packet S6'. In this case, since these values are identical to each other, the initiator determines that neither fake data nor the altering of the data exists in the IKE processing with the responder. Accordingly, the mutual authentication is performed between the initiator and the responder, thereby completing the exchange of the IKE session key and terminating the first phase.

Subsequent to the first phase, the process moves to the second phase in which the SA of the ESP is negotiated and the ESP session key used in the ESP processing is exchanged. Further, in the second phase, a processing called a quick mode is performed in accordance with the SA of the established IKE processing.

In the quick mode, the initiator transmits an IKE packet S7 having the hash payload, the SA payload and the random number payload.

The hash payload includes a hash value HASH (1) calculated by using the hash algorithm of the valid IKESA in the first phase from the SKEYID_a obtained in the first phase, a message ID of the ISAKMP header, the SA payload, and the random number payload. Further, the SA payload includes at least one group of an encryption algorithm for encrypting an ESP payload, a hash algorithm for creating authentication data and a negotiation data of the IPsec such as the valid date of the ESP session key (hereinafter, referred to as IPsecSA), and an index value (security parameter index: SPI) for selecting the ESP session key when receiving an ESP packet which will be described later. Furthermore, the random number payload includes the random number *Ni_b* of the initiator which is newly created. The initiator makes an IKE packet S7 by encrypting a portion of the payload excluding the ISAKMP header, based on the IKE session key SKEYID_e.

Next, the common security key generation apparatus 3 receives the IKE packet S7 via the communication interface 11, sends the IKE packet S7 to the packet decryption unit 15, and determines whether the IKE packet S7 is encrypted or not (step ST11). In this case, since the IKE packet S7 is encrypted, the IKE packet is decrypted by the packet decryption unit 15 (step ST12). At this time, the packet decryption unit 15 decrypts the IKE packet S7 by using the IKE session key SKEYID_e of the initiator stored in the session key maintenance unit 26 in accordance with the encryption algorithm which is set by the valid IKESA of the first phase, and outputs the decrypted IKE packet to the packet analysis unit 16.

In the subsequent step ST13, the packet analysis unit 16 outputs the SA payload included in the IKE packet S7 and the random number payload having the random number *Ni_b ,* and stores the outputted payloads into the session information maintenance unit 18.

Next, the packet analysis unit 16 determines if a key exchange payload *Nr* is included behind the ISAKMP header of the IKE packet S7 (step ST14), further determines whether the random number payload transmitted by the responder is included therein (step ST18), and the hash payload is included therein (step ST20). In this case, since the hash payload alone excluding the key exchange payload and the random number payload *Nr* transmitted by the responder, however, is included in the IKE packet S7, the packet analysis unit 16 proceeds to the step ST21 without performing the steps ST15 to ST17 and the step ST19.

In the step ST21, the packet generation unit 17 transforms a hash value HASH (1) in the hash payload of the IKE packet S7 into a hash value recalculated based on the session information of the responder. At this time, the packet generation unit 17 creates the new hash value HASH (1) by recalculating thereof by using the hash algorithm of the valid IKESA, based on the IKE session key of the responder SKEYID_a stored in the session key maintenance unit 26, the message ID of the ISAKMP, the SA payload value of the IKE packet S7 and the random number *Ni_b* stored in the previous step ST13. Further, the packet generation unit 17 generates an IKE packet S7' including both the hash payload having the new hash value HASH (1) and the random number payload having the random number *Ni_b ,* and outputs the generated IKE packet to the packet encryption unit 27.

In the subsequent step ST22, since the IKE packet S7 is decrypted by the packet analysis unit 16, the process moves on to the step ST23. In the step ST23, the IKE packet S7' is encrypted by using the IKE session key of responder stored in the session key maintenance unit 26, and outputted to the communication interface 12.

Further, the common security key generation apparatus 3 transmits the encrypted IKE packet S7' from the communication interface 12 to the responder (step ST6).

In case the IKE packet S7' is received, the responder calculates the hash value by performing the identical process to the case of making the IKE packet S7 in the initiator, and compares the calculated hash value with the hash value HASH (1) included in the hash payload of the IKE packet S7'. In this case, since these values are identical to each other, the responder determines that neither fake data nor the altering of the data exists in the IKE processing with the initiator.

Next, the responder selects one of the IPsecSA groups included in the SA payload of the IKE packet S7', makes the SA payload having the selected IPsecSA (valid IPsecSA) and the SPI value and, simultaneously, makes a random number payload having the newly generated random number *Nr_b .* Further, the responder calculates a hash value HASH(2) based on the IKE session key SKEYID_a, the message ID included in the ISAKMP header of the IKE packet S7', the random number *Nr_b* in the random number payload, the written SA payload and the random number payload, and makes the hash payload including the hash value HASH(2).

Further, the responder encrypts a portion of the payload excluding the ISAKMP header by using the IKE session key, and transmits the IKE packet S8 having the hash payload, the SA payload and the random number payload. Furthermore, the responder creates the ESP session key KEYMAT by using the hash algorithm of the valid IKESA, based on the SKEYID_d, the protocol field of the valid IPsecSA included in the IKE packet S7', the SPI fields of the initiator and the responder and the random numbers *Ni_b, Nr_b.*

Next, the common security key generation apparatus 3 receives the IKE packet S8 via the communication interface 11, sends the IKE packet S8 to the packet decryption unit 15, and determines whether the IKE packet S8 is encrypted or not (step ST11). In this case, since the IKE packet S8 is encrypted, the IKE packet is decrypted by the packet decryption unit 15 (step ST12). At this time, the packet decryption unit 15 decrypts the IKE packet S8 by using the IKE session key SKEYID_e of the responder stored in the session key maintenance unit 26 in accordance with the encryption algorithm which is set by the valid IKESA of the first phase, and outputs the decrypted IKE packet to the packet analysis unit 16.

In the subsequent step ST13, the packet analysis unit 16 outputs the valid IPsecSA included in the SA payload of the IKE packet S8 and the random number *Nr_b* included in the random number payload, and stores the outputted payloads into the session information maintenance unit 18.

Next, the packet analysis unit 16 determines if a key exchange payload is included behind the ISAKMP header of the IKE packet S8 (step ST14), further determines whether the random number payload *Nr* transmitted by the responder is included therein (step ST18), and the hash payload is included therein (step ST20). In this case, since the random number payload *Nr* transmitted by the responder, but not the key exchange payload is included in the IKE packet S8, the packet analysis unit 16 proceeds to the step ST19 without performing the steps ST15 to ST17.

In the step ST19, the session key generation unit 21 creates the ESP session key in accordance with the RFC 2409. At this time, the session key generation unit 21 analyzes the IKE session key of the initiator SKEYID_d stored in the session key maintenance unit 26, the protocol field of the valid IPsecSA stored in the session information maintenance unit 18, the value of the SPI field and the random numbers *Ni_b, Nr_b* : creates the ESP session key KEYMAT of initiator by using the hash algorithm of the valid IKESA; and stores the created ESP session key KEYMAT into the session key maintenance unit 26.

Similarly, the session key generation unit 21 analyzes the IKE session key of the responder SKEYID_d maintained in the session key maintenance unit 26, the protocol field of the valid IPsecSA stored in the session information maintenance unit 18, the value of the SPI field and the random numbers *Ni_b , Nr_b :* creates the ESP session key KEYMAT of responder by using the hash algorithm of the valid IKESA; and stores the created ESP session key KEYMAT into the session key maintenance unit 26.

In the subsequent step ST21, the packet generation unit 17 transforms a hash value HASH(2) in the hash payload of the IKE packet S8 into a hash value recalculated based on the session information of the initiator. At this time, the packet generation unit 17 analyzes the IKE session key of the initiator SKEYID_a stored in the session key maintenance unit 26, the message ID of the ISAKMP header, the random number *Ni_b* stored in the session information maintenance unit 18, the SA payload and the random number *Nr_b ;* and recalculates the new hash value by using the hash algorithm of the valid IKESA.

Further, the packet generation unit 17 generates IKE packet including a hash payload having the new hash value HASH(2), the random number payload having the random number *Nr_b* and the SA payload having the valid IPsecSA; and outputs the generated IKE packet to the packet encryption unit 27.

In the subsequent step ST22, since the IKE packet S8 is decrypted by the packet analysis unit 16, the process moves on to the step ST23. In the step ST23, the IKE packet S8' is encrypted by using the IKE session key of the initiator stored in the session key maintenance unit 26, and outputted to the communication interface 12.

Further, the common security key generation apparatus 3 transmits the encrypted IKE packet S8' from the communication interface 12 to the initiator (step ST6).

In case the IKE packet S8' is received, the initiator calculates the hash value by performing the identical processing to the case of making the IKE packet S8 in the responder, and compares the calculated hash value with the hash value HASH(2) included in the hash payload of the IKE packet S8'. In this case, since these values are identical to each other, the initiator determines that neither fake data nor the altering of the data exists in the IKE processing with the responder.

Next, the initiator calculates a hash value HASH(3) by using the hash algorithm of the valid IKESA, based on the SKEYID_a, the message ID included in the ISAKMP header of the received IKE packet S8', the self generated random number *Ni_b ,* the random number *Nr_b* included in the random number payload of the received IKE packet S8'; and makes the hash payload including the hash value HASH(3). Further, the initiator makes the IKE packet including the hash payload, and then transmits an IKE packet S9 which is encrypted from a portion of the hash payload with the IKE session key.

Further, the initiator creates the ESP session key KEYMAT by using the hash algorithm of the valid IKESA, based on the SKEYID_d, the protocol field of the valid IPsecSA included in the IKE packet S8', the SPI fields of the initiator and the responder and the random numbers *Ni_b , Nr_b .*

Next, the common security key generation apparatus 3 receives the IKE packet S9 via the communication interface 11, sends the IKE packet S9 to the packet decryption unit 15, and determines whether the IKE packet S9 is encrypted or not (step ST11). In this case, since the IKE packet S9 is encrypted, the IKE packet is decrypted by the packet decryption unit 15 by using the encryption algorithm of the valid IKESA, with the IKE session key of the initiator stored in the session key maintenance unit 26. In the subsequent step ST13, the packet analysis unit 16 determines that the data store in the session information maintenance unit 18 is not included in the IKE packet S9, and proceeds to the following step ST14.

Next, the packet analysis unit 16 determines if a key exchange payload is included behind the ISAKMP header of the IKE packet S9 (step ST14), further determines whether the random number payload *Nr* transmitted by the responder is included therein (step ST18), and the hash payload is included therein (step ST20). In this case, since the hash payload alone excluding the key exchange payload and the random number payload transmitted by the responder in the IKE packet S9 is included in the IKE packet S8, the packet analysis unit 16 proceeds to the step ST21 without performing the steps ST15 to ST17 and the step ST19.

In the step ST21, the packet generation unit 17 transforms a hash value included in the hash payload of the IKE packet S9 into a hash value recalculated based on the session information of the responder. At this time, the packet generation unit 17 creates the new hash value HASH(3) by recalculating the same by using the hash algorithm of the valid IKESA, based on the IKE session key of the responder SKEYID_a stored in the session key maintenance unit 26, the message ID of the ISAKMP header, and the random numbers *Ni_b, Nr_b* stored in the session information maintenance 18. Further, the packet generation unit 17 generates an IKE packet S9' including the hash payload having the new hash value HASH(3), and outputs the generated IKE packet to the packet encryption unit 27.

In the subsequent step ST22, since the IKE packet S9' is decrypted by the packet encryption unit 16 in the previous step ST12, the process moves on to the step ST23. In the step ST23, the IKE session key of the initiator stored in the session key maintenance unit 26 is read out, and outputted to the responder by encrypting the IKE packet S9'.

In case the IKE packet S9' is received, the responder calculates the hash value by performing the identical processing to the case of making the IKE packet S9 in the initiator, and compares the calculated hash value with the hash value HASH(3) included in the hash payload of the IKE packet S9'. In this case, since these values are identical to each other, the responder determines that neither fake data nor the altering of the data exists in the IKE processing with the initiator.

Accordingly, the exchange of the IKE session keys is completed and, simultaneously, the ESP session keys of the initiator and the responder are stored into the common security key generation apparatus 3, thereby terminating the second phase.

Further, there exists a valid term of the ESP session key which is set in the IPsecSA such that a new ESP session key is created by performing the second phase again before the valid term of the ESP session key. Furthermore, there exists a valid term of the IKE session key which is set in the IPsecSA such that a new IKE session key is created by performing the first phase again before the valid term of the IKE session key. In case the IKE session key and the ESP session key are updated in accordance with the valid term, the IKE session key and the ESP session key become outputted to the encrypted packet decryption analysis device 5 again.

After performing the above-described IKE processing, in the communication system, it becomes possible for the ESP process to communicate between the VPN device 2 and the VPN client 4 by encrypting data using the ESP session key. Further, the ESP process includes the operations indicated by the numerals from 10 to 11.

Specifically, in case the VPN client 4 transmits data to the server 1 via the VPN device 2, the VPN client 4 first creates an IP packet of the case the VPN session is not used. In other words, the VPN client 4 makes an IP header with a destination having an IP address of the server 1 and a source having an IP address of its own, and adds the IP header to a front end of the data. Herein, the VPN client 4 selects data encapsulated by an arbitrary protocol, e.g., TCP as an IP datagram to be transmitted to the server 1.

Next, the VPN client 4 adds an ESP tray to a tail of the IP packet in accordance with the order defined in the RFC 2406, renders the IP packet to be an integer multiple of a block length of the encryption algorithm of the IPsecSA selected in the second phase, and encrypts the IP packet with the ESP session key in accordance with the encryption algorithm. Further, the ESP header is added to a front of the encrypted IP packet, an IP header is added to a front of the ESP header with a destination having an IP address of the VPN device 2 and a source having an IP address of the VPN client 4, thereby completing the ESP packet S10 to be transmitted. Furthermore, the SPI field of the SA payload, which is transmitted by the VPN device 2 in the second phase of the IKE processing, is copied and stored into a SPI field of the ESP header.

Next, the common security key generation apparatus 3 receives the ESP packet S10 from the VPN client 4 (step ST1), determines that the received ESP packet is not the IKE packet with reference to the IP header of the ESP packet S10 (step ST2) but the ESP packet (step ST4), and initiates the processing of the step ST5.

Next, as shown in Fig. 5, the common security key generation apparatus 3 renders the packet decryption unit 15 to decrypt the encryption portion of the ESP packet S10 by using the ESP session key of the initiator stored in the session key maintenance unit 26 in accordance with the encryption algorithm which is set by the IPsecSA and outputs the decrypted ESP packet S10 to the packet encryption unit 27.

In the subsequent step ST32, the packet encryption unit 27 encrypts the decrypted ESP packet S10 by using the ESP session key of the responder in accordance with the encryption algorithm which is set by the IPsecSA, and transmits the encrypted ESP packet S10 through the communication interface 12.

Next, in case the ESP packet S10 is received, the VPN device 2 decrypts a portion of the data behind the ESP header with the ESP session key selected by the SPI field value of the ESP header in accordance with the encryption algorithm which is set by the IPsecSA. Further, the VPN device 2 restores the IP packet encapsulated by the VPN client 4 by excluding an ESP trailer from the decrypted data, and transmits the IP packet to the server 1.

Accordingly, in case the server transmits data to the VPN client 4 in accordance with the contents of the IP packet from the VPN device 2, the server transmits the IP packet including the IP datagram having the IP header, with a destination having the IP address of the VPN client 4 and a source having the IP address of the server 1, and data to be transmitted to the VPN client 4.

If the VPN device 2 receives an IP packet having an IP address of the VPN client 4 as the destination, after encrypting the same by encapsulating the IP packet by the ESP header and the ESP trailer, the VPN device 2 transmits the ESP packet S11 to a front of which the IP header is added with a destination to be the VPN client 4 and a source to be the VPN device 2. Further, the SPI field of the SA payload, which is transmitted by the VPN apparatus 4 in the second phase of the IKE processing, is copied and stored into a SPI field of the ESP header.

If the ESP packet S11 is received from the VPN device 2, the common security key generation unit 3 renders the packet decryption unit 15 to decrypt the ESP packet S11 by using the ESP session key of the responder stored in the session key maintenance unit 26 and outputs the decrypted ESP packet S11 to the packet encryption unit 27 (step ST31). Then, the packet encryption unit 27 encrypts the decrypted ESP packet S11 by using the ESP session key of the initiator stored in the session key maintenance unit 26, and transmits the encrypted ESP packet S11 through the communication interface 12.

If the ESP packet S11 which is encrypted by the common security key generation unit 3 is received, the VPN client 4 restores the encapsulated IP packet by decrypting the same, and outputs the data transmitted from the server 1.

As described above, in accordance with the communication system to which the present invention is applied, since the common security key generation unit 3 creates and preserves the IKE session keys of the initiator and the responder, the encryption communication between the initiator and the responder can be analyzed even in the absence of a function for outputting the session key to the initiator and the responder. Therefore, in accordance with the present communication system, the encryption communication can be decrypted and analyzed by using the IKE session key preserved in the common security key generation unit 3, so that an inspection thereof becomes possible when problem occurs in the VPN session.

Further, in accordance with the novel communication system, since the ESP session keys of the initiator and the responder as well as the IKE session key are preserved therein, an inspection thereof becomes possible even if problem occurs to the ESP processing as well as the IKE processing.

While the invention has been shown and described with respect to the preferred embodiments, it will be understood by those skilled in the art that various changes and modifications may be made without departing from the scope of the invention as defined in the following claims.

## Claims

1. A common security key generation apparatus of a communication system, being located between a communication device of an initiator and a communication device of a responder, where an encrypted packet is transmitted and received therebetween, comprising:
a key shared data maintenance unit for storing a predetermined value previously negotiated between the communication device of the initiator and the communication device of the responder;
a security key generation unit for creating a security key by generating a random number;
a public key generation unit for creating a public key by using the security key created by the security key generation unit and the value stored in the key shared data maintenance unit; and
a common security key generation unit for creating a common security key by using a public key received from the communication device of the initiator or the communication device of the responder, the security key created by the security key generation unit and the value stored in the key shared data maintenance unit,
wherein, when a key exchange is performed between the communication device of the initiator and the communication device of the responder,
a security key of the initiator and a security key of the responder are created by the security key generation unit,
a public key of the initiator is created from the security key of the initiator and, simultaneously, a public key of the responder is created from the security key of the responder by the public key generation unit,
the public key of the initiator is transmitted to the responder and, simultaneously, the public key of the responder is transmitted to the initiator, and
a common security key of the responder is created by using the security key of the initiator created by the security key generation unit and the public key received from the communication device of the responder and, simultaneously, a common security key of the initiator is created by using the security key of the responder created by the security key generation unit and the public key received from the communication device of the initiator.

2. The common security key generation apparatus of claim 1, further comprising:
an encrypted packet decryption analysis unit for decrypting and analyzing a packet which is communicated between the communication device of the initiator and the communication device of the responder; and
an outputting unit for outputting the common security key of the initiator and the common security key of the responder created by the common security key generation unit to the encrypted packet decryption analysis unit connected thereto.

3. The common security key generation apparatus of claim 1 or 2, wherein, in case a packet is received from the communication device of the initiator, the packet is decrypted by using the common security key of the initiator and transmitted to the communication device of the responder by encrypting the decrypted packet by using the common security key of the responder and, in case a packet is received from the communication device of the responder, the packet is decrypted by using the common security key of the responder and transmitted to the communication device of the initiator by encrypting the decrypted packet by using the common security key of the initiator.
